# EUROPÄISCHE PATENTSCHRIFT

(11) **EP 0 588 095 B1**
(45) Veröffentlichungstag und Bekanntmachung des Hinweises auf die Patenterteilung: **08.07.1998**
(21) Anmeldenummer: 93113331.8
(22) Anmeldetag: 20.08.1993
(51) Int. Cl.: A01C 5/06

(54) **Drillmaschine**
Seeddriller
Semoir

(30) Priorität: 04.09.1992 DE 4229211; 21.10.1992 DE 4235389
(43) Veröffentlichungstag der Anmeldung: 23.03.1994
(73) Patentinhaber: Amazonen-Werke H. Dreyer GmbH & Co. KG, D-49205 Hasbergen (DE)
(72) Erfinder: Dreyer, Heinz, Dipl.-Ing.Dr., D-49502 Hasbergen (DE); Scheufler, Bernd, Dr., D-49502 Hasbergen (DE); Wiemeyer, Benno, D-49504 Lotte (DE)

(56) Entgegenhaltungen:
- EP-A- 0 201 047
- DE-A- 3 743 032
- DE-B- 1 128 697
- DE-B- 1 168 683
- DE-C- 82 115

## Beschreibung

Die Erfindung betrifft eine Drillmaschine gemäß des Oberbegriffes des Patentanspruches 1 und ein Verfahren zum Schließen eines Säschlitzes oder Säfurche.

Durch die EP-0 201 047 A2 ist eine Drillmaschine für das Zerotillage bzw. Minimumtillage Drillverfahren bekannt. Die hinter diesen Drillscharen angeordneten Tiefenführungs- oder Druckrollen weisen an ihrem äußeren Umfang in Abständen zueinander angeordnete Druckelemente auf, wobei sich zwischen den Druckelementen jeweils ein Freiraum befindet. Im praktischen Einsatz hat sich gezeigt, daß diese Druckrolle nicht in allen Fällen geeignet ist, eine sichere gleichmäßge Tiefenführung sowie eine ausreichende Bedeckung des Saatgutes mit Boden, insbesondere auf schweren, lehmigen und trockenen Böden zu gewährleisten. Auf weichen lockeren Böden ist diese Druckrolle nicht in der Lage eine gleichmäßige Tiefenführung sicherzustellen, weil das Säschar sehr viel Boden nach außen wirft, so daß eine sehr breite Säfurche bzw. ein breiter Säschlitz Geschaffen wird. Da die Druckelemente der Druckrolle eine relativ geringe Breite aufweisen und die Druckrolle parallel zur Fahrtrichtung angestellt ist, sackt das Säschar auf weichem bzw. auf Böden, die eine flache Stoppelbearbeitung erfahren haben, insbesondere dort, wenn etwas tiefer oder wo etwas tiefer bearbeitet wurde, tief ein. Die exakte Tiefenführung ist dann nicht mehr gewährleistet.

Durch die deutsche Offenlegungsschrift 37 43 032 ist eine ähnliche Drillmaschine mit einer ähnlich ausgebildeten Druck- und Tiefenführungsrolle bekannt. Auch dieser Druckrolle haften die gleichen Nachteile wie dem vorbeschriebenen Stand der Technik an. Außerdem hat sich gezeigt, daß auch insbesondere auf feuchten Böden die Gefahr besteht, daß die Druckrolle sich im Inneren mit Erde zusetzt.

Der Erfindung liegt die Aufgabe zugrunde, für alle Einsatzarten und bei verschiedenen Bodenarten eine gleichmäßigere Tiefenführung des Säschares bei gleichbleibender zuverlässiger Schließung des Säschares und/oder eine ausreichende Bedeckung der Samenkörner im Säschlitz mit Bodenteilen zu gewährleisten.

Diese Aufgabe wird erfindungsgemäß durch die kennzeichnende Maßnahme des Anspruches 1 sowie durch die Merkmale des Anspruches 21 gelöst. Infolge dieser Maßnahme, d.h., daß die Druckrolle in Draufsicht gesehen unter einem Winkel schräg zur Fahrtrichtung angestellt hinter dem Säschar angeordnet ist, ergibt sich in überraschender Weise bei einer Druckrolle, die an ihrem äußeren Umfang in Abständen zueinander angeordnete Druckelemente aufweist, wobei sich zwischen den Druckelementen jeweils ein Freiraum befindet, daß bei einer gleichmäßigen Tiefenführung auch unter schwierigsten Verhältnissen immer gewährleistet ist, daß die Samenkörner, die im Säschlitz abgelegt worden sind, mit Bodenteilen bedeckt werden. Die erfindungsgemäße Drillmaschine ist insbesondere für den Einsatz auf nicht in herkömmlicher Weise zu einem Saatbett bereiteten Boden, sondern auf unbearbeiteten oder die eine flache Stoppelbearbeitung oder einer Einmulchung der obersten Bodenschicht unterzogenen Ackerflächen vorgesehen (Zero- und Minimimtillage).

Durch die deutsche Offenlegungsschrift 29 29 622 ist eine Drillmaschine bekannt, die Säschare aufweist, hinter denen Druckrollen mit einer geschlossenen umlaufenden Andruckfläche angeordnet sind. Diese Druckrolle ist in Draufsicht gesehen unter einem Winkel schräg zur Fahrtrichtung angestellt hinter dem Säschar angeordnet. Aufgrund ihrer Ausbildung ist diese Druckrolle jedoch nicht geeignet, unter schwierigen Verhältnissen eine Bedeckung des Saatgutes mit Bodenteilen ununterbrochen sicherzustellen.

In einer Ausführungsform ist vorgesehen, daß die Druckelemente einen abgewinkelten Haltestab aufweisen, welche auf einem drehbaren Nabenteil befestigt ist. In einer anderen Ausführungsform ist vorgesehen, daß ein kreisrunder Halteteller vorhanden ist, und daß an diesem Halteteller die Druckelemente befestigt sind. Dieser Halteteller kann auch Durchbrüche aufweisen oder als speichenförmiges Halteelemente ausgebilde sein. Weiterhin kann an diesem Halteteller ein topfförmig umlaufender Rand vorhanden sein, der insbesondere auf weichen und lockeren Böden sicherstellt, daß die Rolle nicht zu tief in den Boden einsinkt und eine gleichmäßige Tiefenführung des Säschares erreicht wird. Hierbei können die Druckelemente beispielsweise an den topfförmigen umlaufenden Rand befestigt werden.

Weiterhin ist vorgesehen, daß die Druckelemente nur einseitig befestigt sind und ein freies Ende aufweisen. Hierdurch bilden die Rollen mit ihren Druckelementen einen offenen topfförmigen Raum, welcher auf der der Befestigungsseite der Druckelemente abgewandten Seite offen ist. So fallen die nach innen gelangende Bodenteile immer aus dem Innenraum der Rolle heraus.

Um die Verstopfungssicherheit der Rollen auch bei schwieristen Verhältnissen zu gewährleisten, ist vorgesehen, daß die Druckelemente den topfförmigen Rand nach außen in seitlicher Richtung um zumindest das Maß seiner Breite überragen.

Dadurch, daß die Druckelemente von ihrer Befestigungsstelle ausgehend einen sich nach außen öffnenden Winkel zur Drehachse einschließen, ist auch insbesondere auf harten und festen Böden gewährleistet, daß die im Säschlitz abgelegten Samenkörner mit Bodenteilen bedeckt werden.

Dieses wird noch dadurch unterstützt, wenn die Druckelemente an ihrem freien Ende jeweils ein nach außen abgewinkeltes Krallenelement aufweisen, denn diese Krallenelemente ziehen und/oder kratzen Bodenteile in die Säfurche zur Bedeckung der in der Säfurche abgelegten Samenkörner. Somit tragen die Krallenelemente vor allem auf festen Böden zur "Schließung" der Säfurche bei. Auch können die Druckelemente zinkenförmig ausgebildet sein.

Um eine Verstopfungssicherheit auf nassen und klebrigen Böden zu gewährleisten, ist für diesen Einsatzfall vorgesehen, daß der Abstand zwischen den Druckelementen 80 bis 160 mm, vorzugsweise ca. 120 mm beträgt.

Dadurch, daß die Druckrolle eine Breite von mindestens 120 mm, vorzugsweise 220 mm aufweist, wird auch auf weichen und bearbeiteten Böden, die in flacher Tiefe eine Stoppelbearbeitung erfahren haben, eine gleichmäßige Tiefenführung des Säschares erreicht. Gleichzeitig werden auch breite Säfurchen zumindest wieder teilweise geschlossen bzw. die in der Säfurche abgelegten Saatkörner werden ausreichend mit Bodenteilen bedeckt.

Durch die vor erwähnte Druckrolle wird ein Verfahren zum Schließen eines Säschlitzes, welcher von einem Säschar in den Boden gezogen worden ist, mittels einer hinter dem Säschar angeordneten drehbar gelagerten Tiefenführungs- und/oder Druckrolle aufgezeigt. Die Druckrolle weist eine größere Breite quer zur Fahrtrichtung als der Säschlitz quer zur Fahrtrichtung auf, wobei zumindest der eine Seitenbereich der Rolle zumindest teilweise neben dem Säschlitz auf dem von dem Säschar bei der Schaffung des Säschlitzes aufgebrochenen Boden abrollt und der andere Seitenbereich der Rolle einen nach außen abgebogenen Randbereich aufweist, welcher den aufbeworfenen Boden in den Säschlitz schiebt und/oder kratzt, wobei im unteren Bereich der Rolle sich der abgebogene Bereich der Rolle neben den in den Säschlitz abgelegten Samenkörnern sich befindet.

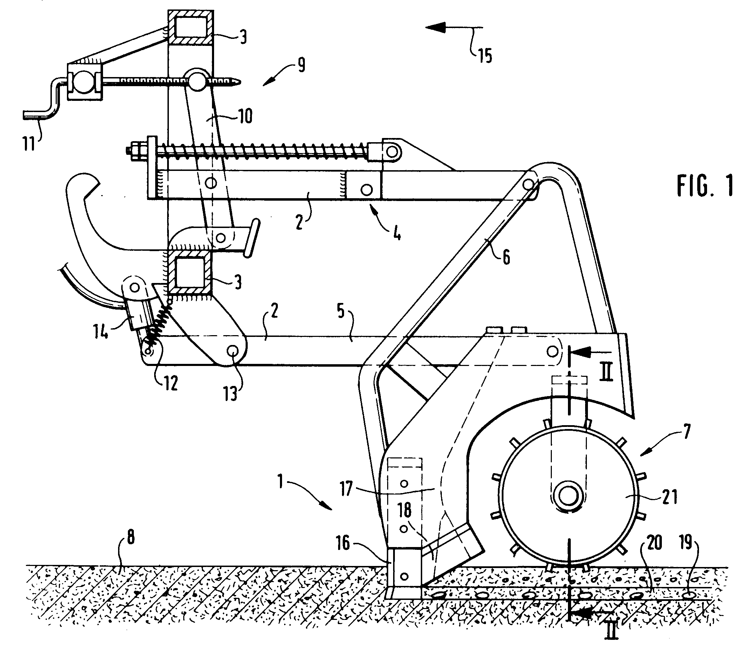

Weitere Einzelheiten der Erfindung sind den übrigen Unteransprüchen, der Beispielsbeschreibung und den Zeichnungen zu entnehmen. Hierbei zeigen
- Fig. 1: ein an eine Drillmaschine angeordnetes Säschar mit der erfindungsgemäß ausgebildeten Rolle in der Seitenansicht,

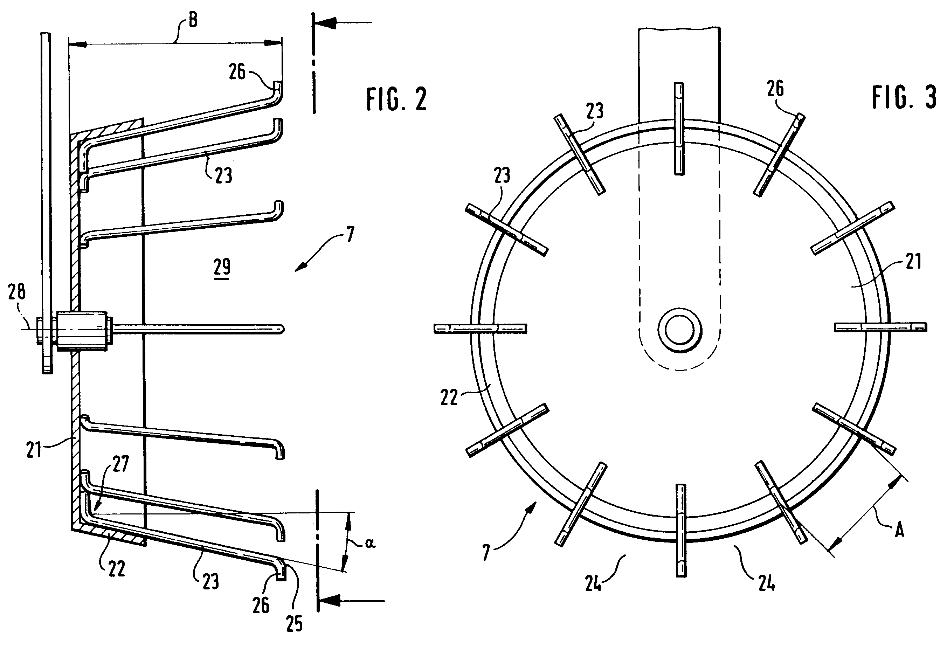

- Fig. 2: die Rolle im Schnitt in der Ansicht II - II in vergrößertem Maßstab, wobei jeweils nur das oberste und unterste Druckelement eingezeichnet ist,
- Fig. 3: die Rolle in der Ansicht III - III,
- Fig. 4: die Anordnung der Rolle bzgl. des von dem Säschar in einem weichen Boden gezogenen Säschlitzes in der Draufsicht,
- Fig. 5: die Lage der Druckrolle im unteren Bereich bzgl. des Säschlitzes nach Fig. 4,
- Fig. 6: die Zuordnung der Druckrolle zu einem von dem Säschar in einem harten Boden gezogenen Säschlitz in der Draufsicht und Prinzipdarstellung,
- Fig. 7: die Lage der Rolle in ihrem unteren Bereich in der Ansicht von hinten gemäß Fig. 6,
- Fig. 8: ein weiteres an einer Drillmaschine angeordnetes Säschar mit einer anderen Rolle in der Seitenansicht und
- Fig. 9: die Ausbildung eines Druckelementes der Rolle nach Fig. 8 in der Ansicht von hinten.

Die als Meißelschare ausgebildeten Säschare 1 sind über die parallelogrammartigen Halterungen 2 in aufrechter Ebene bewegbar an dem Rahmen 3 der Drillmaschine angeordnet. Die Drillmaschine weist ein nicht dargestelltes Fahrgestell und einen ebenfalls nicht dargestellten Vorratsbehälter auf. Die parallelogrammartige Halterung 2 weist die obere Strebe 4 und die untere Strebe 5 auf, die jeweils an ihrem vorderen Ende an dem Rahmen 3 angelenkt sind und auf ihrer rückwärtigen Seite den Scharhalter 6 des Schares 1 tragen. Hinter dem Säschar 1 ist die Tiefenführung- bzw. Druckrolle 7 angeordnet. Diese Rolle 7 bestimmt die Eindringtiefe des Säschares 1 in den Boden 8. Die parallelogrammartige Halterung 2 ist weiterhin an die zentrale Einstellvorrichtung 9 angeschlossen, über die die Eindringtiefe der Säschare 1 in den Boden 8 einzustellen ist. Hierzu ist die obere Strebe 4 an den Schwenkhebel 10 angeordnet, der mittels der Spindel 11 zu verschwenken ist. Durch Verschwenken des Schwenkhebels 10 wird die obere Strebe 4 und somit der Scharhalter 6 verschwenkt. Hierdurch ändert sich die Lage der Rolle 7 in bezug auf das Säschar 1, so daß unterschiedliche Eindringtiefen für das Säschar 1 einzustellen sind.

Bei normalen Einsatzverhältnissen reicht das Eigengewicht des Säschares 1 aus, um in den Boden 8 eindringen zu können. Vor allem auf steinigen und harten Böden hat es sich jedoch als zweckmäßig erwiesen, an der unteren Strebe 5 eine Zugfeder 12 anzuordnen, die eine zusätzliche Kraft auf das Säschar 1 in Richtung auf den Boden 8 ausübt. An dem über das vordere Gelenk 13 der unteren Strebe 5 hinausragenden Stück ist der Hubzylinder 14 angeordnet. Mit diesem Hubzylinder 14 werden die Säschare 1 aus dem Boden 8 gehoben und in eine Transportstellung gebracht.

Auf der der Fahrtrichtung 15 zugewandten Seite des Säschares 1 ist die als Meißel ausgebildete Scharspitze 16 angeordnet. Innerhalb des Scharkörpers 17 des Säschares 1 ist eine Saatgutführung vorgesehen. Über den Auslauf 18 werden die Samenkörner 19 in dem von der Scharspitze 16 in den Boden bezogenen Säfurche 20 abgelegt.

Die hinter dem Säschar 1 angeordnete Rolle 7 weist den kreisrunden Halteteller 21 auf. Der Halteteller 21 besitzt einen topfförmig umlaufenden Rand 22. An diesem Halteteller 21 und an dem topfförmig umlaufenden Rand 22 sind die als Zinken 23 ausgebildeten Druckelemente in Abständen A zueinander angeordnet, wobei sich zwischen den Zinken 23 jeweils ein Freiraum 24 befindet. Der Abstand A zwischen den Zinken 23 sollte in einem Abstand A zwischen 80 bis 160 mm liegen. Bei Versuchen hat sich herausgestellt, daß ein Abstand A von 120 mm für die meisten Einsatzfälle richtig ist. Die Rolle 7 weist eine Breite B von 180 mm auf, wobei sich bei Versuchen herausgestellt hat, daß eine Breite von 120 mm ausreichend ist. Die Zinken 23 sind jeweils nur einseitig an dem Halteteller 21 befestigt und weisen ein seitwärts nach außen gerichtetes freies Ende 25 auf. An ihrem freien Ende 25 befindet sich jeweils ein nach außen abgewinkeltes Krallenelement 26. Weiterhin sind die Zinken 23 von ihrer Befestigungsstelle 27 aus gesehen unter einem sich nach außen öffnenden Winkel α zur Drehachse 28 der Rolle 7 angeordnet. Somit bilden die Zinken 23 einen offenen topfförmigen Freiraum 29, welcher von der Befestigungsseite ausgehend nach außen offen ist. Die Druckrolle 7 ist in Draufsicht gesehen unter einen Winkel β schräg zur Fahrtrichtung 15 angestellt. Der Winkel β sollte mindestens 5°, maximal 15° betragen, wobei sich bei Versuchen herausgestellt hat, daß ein Winkel zwischen 5 - 12°, insbesondere ein Winkel β von etwa 8° die größten Vorteile bietet. Die Zinken 23 können elastisch ausgebildet und/oder elastisch an dem Halteteller 21 befestigt sein. Auch der Halteteller kann elastisch ausgebildet sein, so daß sich für die Zinken 23 eine elastische Befestigung ergibt.

Die Druckrolle 7 ist seitlich versetzt zur Mittellinie des Säschares 1 angeordnet. Es muß hierbei beachtet werden, daß die Druckrolle 7 derart gegenüber dem Säschar 1 angeordnet ist, daß die Krallenelemente 26 der Druckrolle 7 nicht die der Säfurche 20 abgelegten Saatkörner 19 aus der Sätfurche 20 herausreißen oder berühren. Diese bedeutet, daß die krallenförmigen Elemente 26 sich seitlich nach außen versetzt von der Mittellinie der Säfurche 20 in einem Abstand befinden müssen.

Die Funktionsweise der Druckrolle 7 ist folgende:

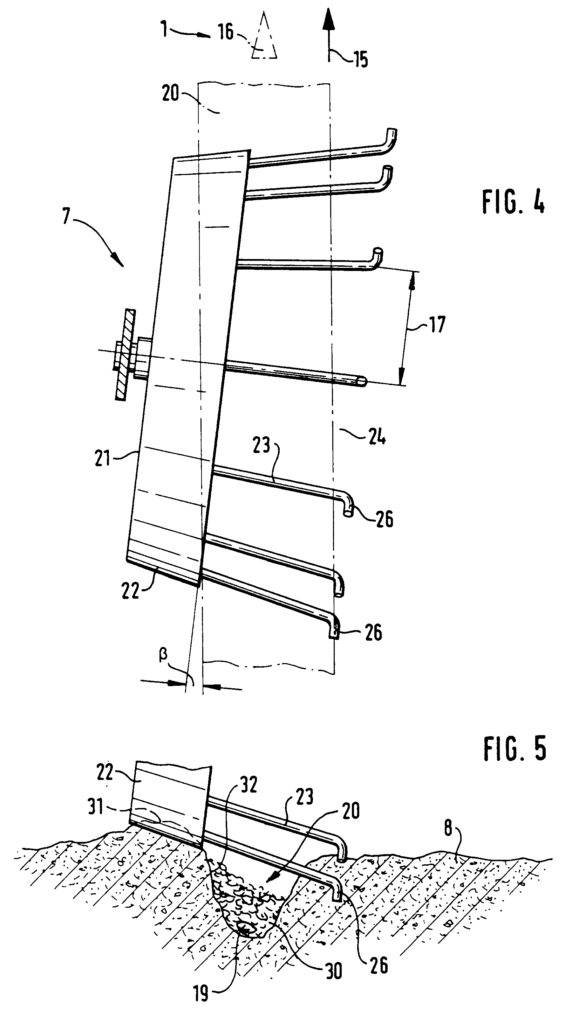

Über die Rolle 7, die sich mit ihrem topfförmigen Rand 22 und den Zinken 23 auf den Boden 8 neben der Säfurche 20 beidseitig abstützt, wird zunächst eine gleichmäßige Schartiefenführung auch bei wechselnden Bodenverhältnissen erreicht. Dieses gilt sowohl für härteren wie auch für weicheren bearbeiteten Boden. Wie die Fig. 4 und 5 bei einem Einsatz der Drillmaschine auf einem weicherem Boden zeigen, reißt das Säschar 1 mit der Scharspitze 16 eine relativ breite Säfurche 20 in den Boden. Nach Schaffung der Säfurche 20 werden bevor die Rolle 7 die Säfurche 20 wieder mit Bodenteilen 30 auffüllt, die Samenkörner 19 auf dem Grund der Säfurche 20 abgelegt. Dadurch, daß die Rolle 7 schräg zur Fahrtrichtung 15 angestellt ist, kratzen bzw. schieben die Zinken 23 und die Krallen 26 Bodenteile 30 in die Säfurche 20 und füllen die Säfurche 20 wieder auf. Gleichzeitig drückt der topfförmige Rand 22 den seitlich von der Säfurche 20 aufgeworfenen Boden 31 bzw. die Seitenflanke 32 der Säfurche 20 in die Säfurche 20 zurück. Hierdurch wird somit sichergestellt, daß die Samenkörner 19 mit ausreichenden Bodenteilen 20 bedeckt werden. Weiterhin werden durch die Zinken 23 evtl. an den Säscharen 1 festhängenden längeren Pflanzenteilen auf den Boden 8 gedrückt und halten diese fest, so daß bei Vorwärtsbewegung des Säschares 1 diese an dem Säschar 1 anhängenden Bodenteile von dem Säschar 1 weggezogen werden.

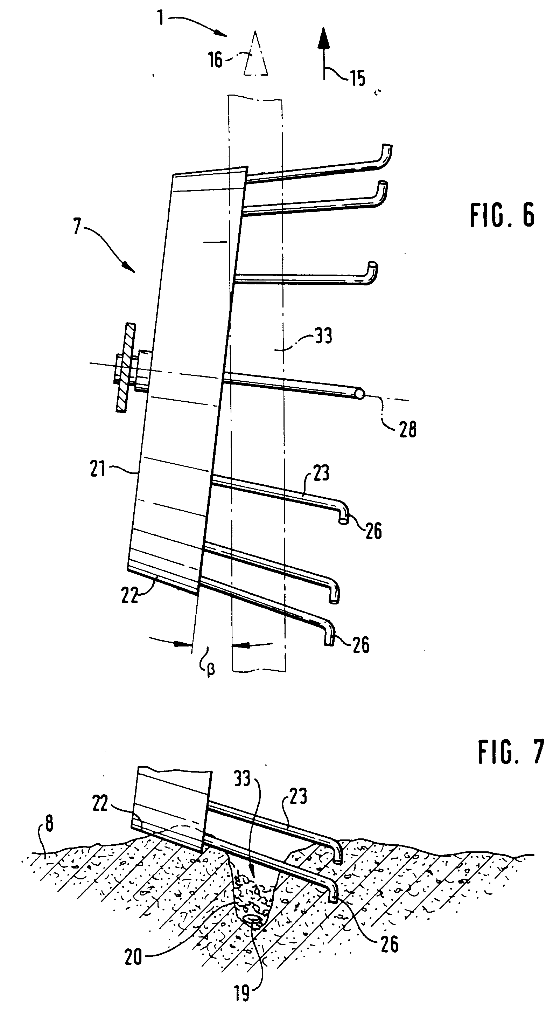

Die Fig. 6 und 7 zeigen den Einsatz der Drillmaschine mit der Rolle 7 auf einem harten unbearbeiteten Boden. In diesen Boden 8 reißt das Säschar 1 nur eine relativ schmale Säfurche 33. Die Druckrolle 7 stützt sich mit ihrem topfförmigen Rand 22 und ihren zinkenförmigen Druckelementen 23 auf beiden Seiten der Säfurche 30 auf der Bodenoberfläche ab. Hierdurch ergibt sich wiederum eine gleichmäßige Tiefenführung für das Säschar 1. Außerdem wird durch die Schrägstellung der Rolle 7 zur Fahrtrichtung 15 sowie durch die abgewinkelten Krallen 26 der Zinken 23 Bodenteile seitlich von der Säfurche 33 in die Säfurche 33 gekratzt, so daß die Säfurche 33 mit Bodenteilen 20 aufgefüllt und die Samenkörner 19 mit ausreichend Bodenteilen 20 bedeckt werden.

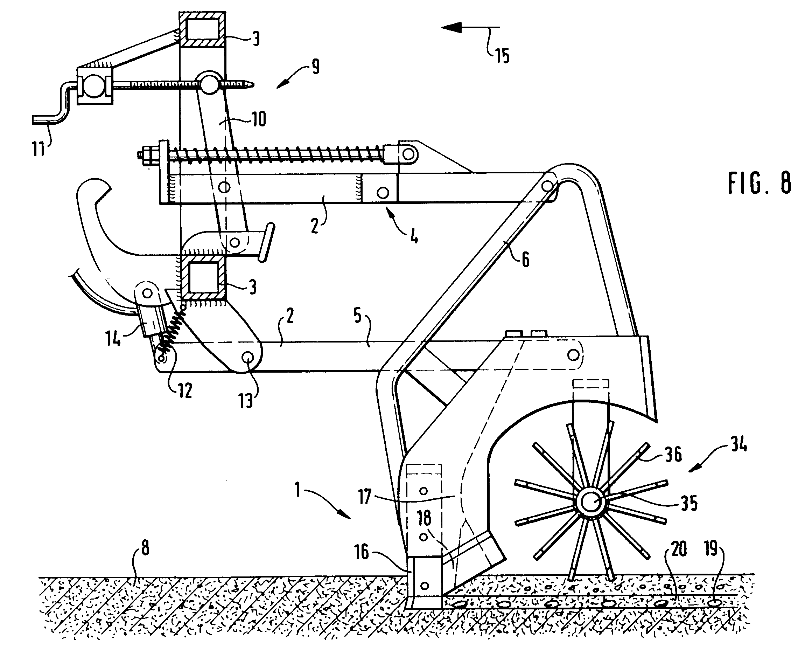

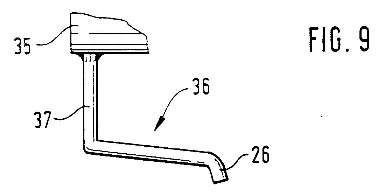

Die Druckrolle 34 gemäß den Fig. 8 und 9 weist den drehbar gelagerten Nabenteil 35 auf, an welchem die zinkenförmigen Druckelemente 36 befestigt sind. Die Druckelemente 36 sind mittels eines abgewinkelten Haltestabes 37 an der Nabe 35 befestigt. Die Funktionsweise der Druckrolle 34 gemäß den Fig. 8 und 9 mit den zinkenförmigen Elementen 36 ist entsprechend der vorbeschriebenen Rolle 7.

## Patentansprüche

1. Drillmaschine mit einem Rahmen, Vorratsbehälter, Säscharen (1) und hinter den Säscharen (1) an diesen angeordneten Tiefenführungs- und/oder Druckrollen (7), wobei diese Rollen an ihrem äußeren Umfang in Abständen zueinander angeordnete Druckelemente (23,36) aufweisen, wobei sich zwischen den Druckelementen (23,36) jeweils ein Freiraum (24) befindet, dadurch gekennzeichnet, daß die Tiefenführungs- und/oder Druckrolle (7,34) in Draufsicht gesehen unter einem Winkel (β) schräg zur Fahrtrichtung (15) angestellt hinter dem Säschar (1) angeordnet ist, so daß im Betrieb Bodenteile in die Säfurche gekratzt bzw. geschoben werden.

2. Drillmaschine nach Anspruch 1, dadurch gekennzeichnet, das der Winkel (β) mindestens 5°, maximal 15° beträgt.

3. Drillmaschine nach Anspruch 2, dadurch gekennzeichnet, daß der Winkel (β) etwa 5° - 12°, vorzugsweise etwa 8° beträgt.

4. Drillmaschine nach Anspruch 1, dadurch gekennzeichnet, daß die Druckrolle (7) verstellbar am Säschar (1) angeordnet ist, so daß der Winkel (β) einstellbar ist.

5. Drillmaschine nach Anspruch 1, dadurch gekennzeichnet, da_ die Druckelemente (36) eine abgewinkelten Haltestab (37) aufweisen, welcher auf einem Nabenteil (35) befestigt ist.

6. Drillmaschine nach Anspruch 1, dadurch gekennzeichnet, da_ ein kreisrunder Halteteller (21) vorgesehen ist, da_ an diesem Halteteller (21) die Druckelemente (23) befestigt sind.

7. Drillmaschine nach Anspruch 6, dadurch gekennzeichnet, da_ der Halteteller (21) einen topffvrmigen umlaufenden Rand (22) aufweist.

8. Drillmaschine nach Anspruch 7, dadurch gekennzeichnet, da_ die Druckelemente (23) den Rand (22) in dessen Bereich zumindest nicht wesentlich in radialer Richtung nach au_en |berragen.

9. Drillmaschine nach Anspruch 7, dadurch gekennzeichnet, da_ die Druckelemente (23) auf der Au_enseite des topffvrmigen umlaufenden Randes befestigt sind.

10. Drillmaschine nach Anspruch 5, dadurch gekennzeichnet, da_ die Druckelemente (23) den topffvrmigen Rand (22) nach au_en in seitlicher Richtung um zumindest das Ma_ seiner Breite |berragen.

11. Drillmaschine nach einem oder mehreren der vorstehenden Anspr|che, dadurch gekennzeichnet, da_ die Druckelemente (23,36) nur einseitig befestigt sind und ein freies Ende (25) aufweisen.

12. Drillmaschine nach einem oder mehreren der vorstehenden Anspr|che, dadurch gekennzeichnet, da_ die Rollen (7,34) mit ihren Druckelementen (23,36) einen offenen topffvrmigen Raum (29) bilden, welcher der Befestigungsseite (27) abgewandt offen ist.

13. Drillmaschine nach einem oder mehreren der vorstehenden Anspr|che, dadurch gekennzeichnet, da_ die Druckelemente (23,36) elastisch ausgebildet und/oder elastisch befestigt sind.

14. Drillmaschine nach Anspruch 1, dadurch gekennzeichnet, da_ die Druckelemente (23,36) von ihrer Befestigungsstelle (27) aus gesehen einen sich nach au_en vffnenden Winkel (α) zur Drehachse (28) einschlie_en.

15. Drillmaschine nach einem oder mehreren der vorstehenden Anspr|che, dadurch gekennzeichnet, da_ die Druckelemente (23,36) an ihrem freien Ende (25) jeweils ein nach au_en abgewinkeltes Krallenelement (26) aufweist.

16. Drillmaschine nach einem oder mehreren der vorstehenden Anspr|che, dadurch gekennzeichnet, da_ die Druckelemente (23,36) zinkenfvrmig ausgebildet sind.

17. Drillmaschine nach einem oder mehreren der vorstehenden Anspr|che, dadurch gekennzeichnet, da_ der Abstand (A) zwischen den Druckelementen (23,36) 80 bis 160 mm, vorzugsweise ca. 120 mm betrdgt.

18. Drillmaschine nach einem oder mehreren der vorstehenden Ansprüche, dadurch gekennzeichnet, daß die Druckrolle (4,37) eine Breite (B) von mindestens 180 mm, vorzugsweise 220 mm aufweist.

19. Drillmaschine nach einem oder mehreren der vorstehenden Ansprüche, dadurch gekennzeichnet, daß die Druckrolle (7,34) seitlich versetzt zur Mittellinie des Säschares (1) angeordnet ist.

20. Drillmaschine nach einem oder mehreren der vorstehenden Ansprüche, dadurch gekennzeichnet, daß die Druckrolle (7,34) in seitlicher Richtung verstellbar am Säschar (1) angeordnet ist.

21. Verfahren zum Schließen eines Säschlitzes oder Säfurche (20,33), welcher von einem Säschar (1) in den Boden (8) gezogen worden ist, mittels einer hinter dem Säschar (1) angeordneten drehbar gelagerten Tiefenführungs- und/oder Druckrolle (7,34), die an ihrem äußeren Umfang in Abständen zueinander angeordnete Druckelemente (23,26) aufweist, wobei sich zwischen den Druckelementen (23,26) jeweils ein Freiraum (24) befindet, in Draufsicht gesehen unter einem Winkel (β) schräg zur Fahrtrichtung angestellt ist und eine größere Breite quer zur Fahrtrichtung (15) als der Säschlitz (20,33) in seinem oberen Bereich aufweist, wobei zumindest der eine Seitenbereich der Rolle (7,34) neben der Säfurche (20,33) auf dem bei der Schaffung des Säschlitzes (20,33) aufgeworfene Boden (31) abrollt und der andere Seitenbereich der Rolle (7,34) einen nach außen gebogenen Randbereich (26) aufweist, welcher den aufgeworfenen Boden (20) in den Säschlitz (20,33) schiebt und/oder kratzt, wobei im unteren Bereich der Rolle (7,34) sich der abgebogene Bereich (26) der Rolle (7,34) neben den in dem Säschlitz (20,33) abgelegten Samenkörner (19) sich befinden.

## Claims

1. Seed drill, including a frame, hopper, sowing coulters (1) and depth control and/or pressure rollers (7) disposed on and behind the sowing coulters (1), these rollers having pressing elements (23,36) disposed on their outer circumference at spacings from one another, and a free area (24) being provided between the respective pressing elements (23,36), characterised in that, when viewed from above, the depth control and/or pressure roller (7,34) is disposed behind the sowing coulter (1) inclinedly orientated at an angle (β) relative to the direction of travel (15), so that, during the operation, soil particles are scraped or pushed into the sowing furrow.

2. Seed drill according to claim 1, characterised in that the angle (β) is a minium of 5° and a maximum of 15°.

3. Seed drill according to claim 2, characterised in that the angle (β) is substantially 5° - 12°, preferably substantially 8°.

4. Seed drill according to claim 1, characterised in that the pressure roller (7) is adjustably disposed on the sowing coulter (1), so that the angle (β) is adjustable.

5. Seed drill according to claim 1, characterised in that the pressing elements (36) have an angled retaining bar (37), which is mounted on a hub member (35).

6. Seed drill according to claim 1, characterised in that a circular retaining plate (21) is provided, and in that the pressing elements (23) are mounted on this retaining plate (21).

7. Seed drill according to claim 6, characterised in that the retaining plate (21) has a cup-like, encircling rim (22).

8. Seed drill according to claim 7, characterised in that the pressing elements (23) protrude outwardly beyond the rim (22) in its region at least not substantially in the radial direction.

9. Seed drill according to claim 7, characterised in that the pressing elements (23) are mounted on the external surface of the cup-like, encircling rim.

10. Seed drill according to claim 5, characterised in that the pressing elements (23) protrude outwardly in the lateral direction beyond the cup-like rim (22) by at least the dimension of its width.

11. Seed drill according to one or more of the preceding claims, characterised in that the pressing elements (23,36) are only secured at one end and have a free end (25).

12. Seed drill according to one or more of the preceding claims, characterised in that the rollers (7,34) form, with their pressing elements (23,36), an open, cup-shaped area (29), which is open remote from the mounting side (27).

13. Seed drill according to one or more of the preceding claims, characterised in that the pressing elements (23,36) are resilient and/or are resiliently mounted.

14. Seed drill according to claim 1, characterised in that, when viewed from their mounting location (27), the pressing elements (23,36) form an outwardly opening angle (α) relative to the axis of rotation (28).

15. Seed drill according to one or more of the preceding claims, characterised in that the pressing elements (23,36) each have at their free end (25) an outwardly bent, claw-like portion (26).

16. Seed drill according to one or more of the preceding claims, characterised in that the pressing elements (23,36) have a tine-like configuration.

17. Seed drill according to one or more of the preceding claims, characterised in that the spacing (A) between the pressing elements (23,36) is between 80 mm and 160 mm, preferably approx. 120 mm.

18. Seed drill according to one or more of the preceding claims, characterised in that the pressure roller (4,37) has a width (B) of at least 180 mm, preferably 220 mm.

19. Seed drill according to one or more of the preceding claims, characterised in that the pressure roller (7,34) is disposed so as to be laterally offset relative to the centre axis of the sowing coulter (1).

20. Seed drill according to one or more of the preceding claims, characterised in that the pressure roller (7,34) is disposed on the sowing coulter (1) so as to be adjustable in the lateral direction.

21. Method of closing a sowing hole or sowing furrow (20,33), which has been made in the soil (8) by a sowing coulter (1), by means of a rotatably mounted depth control and/or pressure roller (7,34), which is disposed behind the sowing coulter (1) and has pressing elements (23,26) disposed on its outer circumference at spacings from one another, a free area (24) being provided between the pressing elements (23,26), being inclinedly orientated at an angle (β) relative to the direction of travel when viewed from above, and having a greater width transversely relative to the direction of travel (15) than the sowing hole (20,33) in its upper region, at least one lateral region of the roller (7,34) travelling adjacent the sowing furrow (20,33) on the soil (31) which was piled-up when creating the sowing hole (20,33), and the other lateral region of the roller (7,34) having an outwardly bent edge region (26), which pushes and/or scrapes the piled-up soil (20) into the sowing hole (20,33), the bent region (26) of the roller (7,34) being situated in the lower region of the roller (7,34) adjacent the seeds (19), which are deposited in the sowing hole (20,33).

## Revendications

1. Semoir comportant un châssis, un réservoir, des socs de semoir (1) et derrière les socs (1), des galets de pression et/ou de guidage en profondeur (7) montés sur les socs, ces galets ayant à leur périphérie extérieure, des éléments de pression (23, 36) disposés à distance et entre les éléments de pression (23, 36) il y a chaque fois un intervalle (24),
caractérisé en ce que
les galets de pression et/ou de guidage en profondeur (7, 34) sont disposés en vue de dessus suivant un certain angle (β) en biais par rapport à la direction de déplacement (15), derrière le soc de semoir (1) pour qu'en fonctionnement, les morceaux de terre soient raclés ou poussés dans les sillons.

2. Semoir selon la revendication 1,
caractérisé en ce que
l'angle (β) est égal au minimum à 5° et au maximum égal à 15°.

3. Semoir selon la revendication 2,
caractérisé en ce que
l'angle (β) est compris entre environ 5° et 12° et de préférence égal à 8°.

4. Semoir selon la revendication 1,
caractérisé en ce que
le galet de pression (7) est monté réglable sur le soc (1) pour pouvoir régler l'angle (β).

5. Semoir selon la revendication 1,
caractérisé en ce que
les éléments de pression (36) comportent une tige de fixation (37) coudée elle-même fixée sur une partie de moyeu (35).

6. Semoir selon la revendication 1,
caractérisé par
un plateau de fixation (21) circulaire et les éléments de pression (23) sont fixés à ce plateau (21).

7. Semoir selon la revendication 6,
caractérisé en ce que
le plateau de fixation (21) comporte un bord périphérique (22) en forme de pot.

8. Semoir selon la revendication 7,
caractérisé en ce que
les éléments de pression (23) dépassent le bord (22) dans sa zone au moins d'une manière non importante dans la direction radiale.

9. Semoir selon la revendication 7,
caractérisé en ce que
les éléments de pression (23) sont fixés sur le côté extérieur du bord périphérique en forme de pot.

10. Semoir selon la revendication 5,
caractérisé en ce que
les éléments de pression (23) dépassent le bord (22) en forme de pot, vers l'extérieur dans la direction latérale, au moins de la dimension de sa largeur.

11. Semoir selon l'une quelconque des revendications précédentes,
caractérisé en ce que
les éléments de pression (23, 36) ne sont fixés que par une extrémité et ont une extrémité libre (25).

12. Semoir selon l'une ou plusieurs des revendications précédentes,
caractérisé en ce que
les galets (7, 34) forment avec leurs éléments de pression (23, 36), un volume (29) en forme de pot ouvert, dont l'ouverture est opposée au côté de fixation (27).

13. Semoir selon l'une quelconque des revendications précédentes,
caractérisé en ce que
les éléments de pression (23, 36) sont élastiques et/ou sont fixés de manière élastique.

14. Semoir selon la revendication 1,
caractérisé en ce que
les éléments de pression (23, 36) enferment, en partant de leur point de fixation (27), un angle ouvert vers l'extérieur (α) par rapport à l'axe de rotation (28).

15. Semoir selon l'une quelconque des revendications précédentes,
caractérisé en ce que
les éléments de pression (23, 36) ont à leur extrémité libre (25) chaque fois un élément en forme de griffe (26) replié vers l'extérieur.

16. Semoir selon l'une quelconque des revendications précédentes,
caractérisé en ce que
les éléments de pression (23, 36) sont en forme de dents.

17. Semoir selon l'une quelconque des revendications précédentes,
caractérisé en ce que
la distance (A) entre les éléments de pression (23, 36) est comprise entre 80 et 160 mm et est égale de préférence à environ 120 mm.

18. Semoir selon l'une quelconque des revendications précédentes,
caractérisé en ce que
le galet de pression (4, 37) a une largeur (B) au minimum égale à 180 mm et de préférence égale à 220 mm.

19. Semoir selon l'une quelconque des revendications précédentes,
caractérisé en ce que
le galet de pression (7, 34) est décalé latéralement par rapport à la ligne d'axe du soc de semoir (1).

20. Semoir selon l'une quelconque des revendications précédentes,
caractérisé en ce que
le galet de pression (7, 34) est réglable dans la direction latérale par rapport au soc (1).

21. Procédé pour fermer un sillon ou une trace à semences (20, 33) qui est tiré dans le sol (8) par un soc de semoir (1), à l'aide d'au moins un galet de guidage en profondeur et/ou de pression (7, 34) monté à rotation derrière le soc de semoir (1), et des éléments de pression (23, 26) prévus à sa périphérie extérieure, à intervalle, avec entre les éléments de pression (23, 26) chaque fois un espace libre (24) qui, en vue de dessus, se trouve incliné suivant un angle (β) en biais par rapport à la direction de déplacement, en ayant une plus grande largeur transversalement à la direction de déplacement (15) que la trace à semences (20, 33) dans sa zone ouverte, et au moins l'une des zones latérales des galets (7, 34) roule à côté du sillon (20, 33) sur le sol (31) résultant de la formation de la fente de semences (20, 33) et l'autre zone latérale du galet (7, 34) présente une zone de bord (26) recourbée vers l'extérieur qui pousse et/ou racle le sol (20) éjecté de nouveau dans le sillon à semences (20, 33) et dans la zone inférieure du galet (7, 34), la zone recourbée (26) du galet (7, 34) se trouve à côté des graines de semence (19) déposées dans la fente à semences (20, 33).
